(19) Europäisches Patentamt
European Patent Office
Office européen des brevets

(11) **EP 3 161 515 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(21) Anmeldenummer: **15759395.5**

(22) Anmeldetag: **14.08.2015**

(51) Int Cl.:
***G01S 13/58*** (2006.01)

(86) Internationale Anmeldenummer:
**PCT/EP2015/068727**

(87) Internationale Veröffentlichungsnummer:
**WO 2016/030208 (03.03.2016 Gazette 2016/09)**

(54) **VERFAHREN ZUR POSITIONSBESTIMMUNG EINES SPURGEFÜHRTEN FAHRZEUGS, ANWENDUNG DES VERFAHRENS UND SYSTEM ZUR POSITIONSBESTIMMUNG EINES SPURGEFÜHRTEN FAHRZEUGS**

METHOD FOR POSITIONING A TRACK-BOUND VEHICLE, USE OF THE METHOD, AND SYSTEM FOR POSITIONING A RAIL-BOUND VEHICLE

PROCÉDÉ DE DÉTERMINATION DE LA POSITION D'UN VÉHICULE SUR RAILS, APPLICATION DU PROCÉDÉ ET SYSTÈME DE DÉTERMINATION DE POSITION D'UN VÉHICULE SUR RAILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2014 DE 102014217194**

(43) Veröffentlichungstag der Anmeldung:
**03.05.2017 Patentblatt 2017/18**

(73) Patentinhaber: **Siemens Mobility GmbH
81739 München (DE)**

(72) Erfinder:
• **BLEIDORN, Dirk Ernst
38126 Braunschweig (DE)**
• **KOHLRUSS, Jacob Johannes
38116 Braunschweig (DE)**

(56) Entgegenhaltungen:
| | |
|---|---|
| EP-A1- 0 761 522 | DE-A1- 2 506 605 |
| DE-A1- 2 942 933 | DE-A1-102006 028 465 |
| DE-A1-102009 060 727 | US-A- 4 063 239 |
| US-A- 4 863 123 | US-A1- 2007 109 176 |

• **HILGER G: "RADARTECHNOLOGIE - BERUEHRUNGSFREIE WEG- UND GESCHWINDIGKEITS- MESSUNG FUER SCHIENENFAHRZEUGE", ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 122, Nr. 9/10, 1. September 1998 (1998-09-01), Seite 533, XP000781633, ISSN: 0941-0589**

**Beschreibung**

Die Erfindung betrifft ein Verfahren zur Positionsbestimmung eines spurgeführten Fahrzeugs, insbesondere eines Schienenfahrzeugs, mittels Objekten in bekannter Position entlang des Fahrweges des Fahrzeugs, bei dem zur Positionsbestimmung des Fahrzeugs in Bezug auf das jeweilige Objekt mittels Radar die jeweilige Geschwindigkeit des Fahrzeugs mittels Erfassung der Frequenzverschiebung eines empfangenen reflektierten Radarsignals ermittelt und das jeweilige Objekt erfasst wird.

Ein solches Verfahren ist in der europäischen Patentanmeldung EP 0 761 522 A1 beschrieben. Bei diesem bekannten Verfahren wird ein Objektsensorsystem mit mindestens einer Videokamera mit nachgeordneter Bildverarbeitung oder ein bildgebendes Radarsystem verwendet. Das Objektsystem erfasst bei der Bewegung des Fahrzeugs neben der Fahrspur bzw. einer Gleisstrecke angeordnete Objekte und identifiziert sie; die Objekte können beispielsweise Signalmaste oder Landschaftsmerkmale sein, die sich in der Regel voneinander unterscheiden. Zur Identifizierung werden die jeweiligen Objekte mit Objektortsdaten verglichen, die in einem Objekt-Ortsverzeichnisspeicher auf dem Fahrzeug gespeichert sind. Auf diese Weise ist ein erstes Positionsresultat gewonnen.

Zur Gewinnung eines zweiten Positionsresultats wird bei dem bekannten Verfahren zeitlich parallel zu dem ersten Positionsresultat ein Wegmesssystem eingesetzt, das ein Doppler-Radarsystem beinhalten kann. In diesem System werden die ihm zugeführten Daten über die zurückgelegte Weglänge mit in einem Fahrplanspeicher abgelegten Solldaten unter Gewinnung des zweiten Positionsresultats verglichen.

Außerdem wird mittels eines Drehwinkelmesssystems ein drittes Positionsresultat gewonnen. Alle drei unabhängig voneinander gewonnenen Positionsresultate werden einer bordeigenen Auswerteeinheit in einem 2-von-3-Entscheidungsfindungsprozess daraufhin untersucht, innerhalb welches Positionsintervalls einer vorgegebenen Länge wenigstens zwei der Positionsresultate liegen; dieses Intervall wird dann als die gesuchte Fahrzeugposition ausgegeben.

Das Dokument US 4 863 123 A offenbart ein Verfahren zum Lokalisieren einer Mobileinheit in einem Eisenbahnnetz mit einem System, das einen Sensor in Form eines Radars umfasst, die in die Mobileinheit integriert ist und das mit entlang der Eisenbahnlinie platzierten festen Markern zusammenwirkt. Das Radar ist zum Messen unter Ausnutzung des Dopplereffektes geeignet. Außerdem umfasst das Verfahren eine Datenbank, die die Beschreibung eines Graphen enthält, deren Knoten oder mehrere Knoten die festen Markierungen darstellen und deren Verbindungen der Eisenbahngleise darstellen. Es wird eine mit dem Radar verbundene Datenbank genutzt, um die Position der mobilen Einheit zu bestimmen.

US 4 063 239 A offenbart ein Doppler-Radar, bei dem das Entfernungssignal differenziert wird, um eine Bereichsänderungsrate zu erhalten. Ein Geschwindigkeitssignal wird aus der Dopplerfrequenzverschiebung von Signalen erhalten, die von einem beweglichen Objekt zurückgegeben werden, wobei die Entfernungsraten- und Geschwindigkeitssignale verglichen werden. Falls die Differenz größer ist um einen vorbestimmten Betrag, werden die Entfernungs- und Doppler- oder Geschwindigkeitskreise zurückgesetzt.

US 2007/109176 A1 offenbart ein Radar mit einer Zielmesskomponente, einem Differenzgeschwindigkeitsrechner und einem Gesamtgeschwindigkeitsbestimmungsabschnitt. Die Zielmesskomponente sendet und empfängt wiederholt einen Radarimpuls über einen Erfassungsbereich in Messintervallen, um eine Position eines Ziels im Erfassungsbereich zu messen und eine Dopplergeschwindigkeit des Ziels auf der Grundlage einer Dopplerverschiebung der von dem Ziel reflektierten Radarstrahlung zu messen. Ein Rechner bestimmt eine aktuelle Gesamtgeschwindigkeit durch Berechnen eines gewichteten Durchschnitts der Dopplergeschwindigkeit, der Differenzgeschwindigkeit und einer zuvor bestimmten Gesamtgeschwindigkeit.

DE 10 2006 028465 A1 offenbart ein Verfahren zur Bestimmung von Geschwindigkeiten und Entfernungen von Objekten relativ zu einem Radarsystem eines Kraftfahrzeugs, wobei ein Erfassungsbereich des Radarsystems in wenigstens zwei Teilbereiche aufgeteilt ist, der Erfassungsbereich in aufeinander folgenden Messzyklen auf reflektierende Objekte untersucht wird, wobei in einem Messzyklus empfangene Radarsignale nach Teilbereichen getrennt verarbeitet werden und verarbeitete Signale zu einem nach Raumrichtungen differenzierten Gesamtergebnis zusammengefügt werden.

Um die Geschwindigkeit oder Entfernung zu messen, die das verfolgte Fahrzeug zurückgelegt hat, offenbart das Dokument DE 29 42 933 A1, dass am Anfang der Strecke eine Markierung angeordnet ist, die vom Fahrzeug registriert wird. Von dieser Markierung bis zum Ziel und entlang der gesamten Länge des Erfassungsbereiches, die von der Antenne am Fahrzeug abgestrahlt wird und von der der überwiegende Anteil des reflektierten Dopplersignals stammt, wird ein Material verwendet, das zu einer symmetrischen Reflexion des vom Fahrzeug übertragenen Radarsystemsignals führt.

DE 25 06 605 A1 offenbart eine Antenne eines begleitenden Doppler-Radarsystems, die diagonal auf eine Schiene gerichtet und auf die Befestigungsmittel ausgerichtet ist, die die Schienen an den Schwellen oder dem Schotter der Schiene befestigen. Die Befestigungsmittel bestehen zum Beispiel aus Schienenbolzen, Schraubenkopfköpfen für Klemmplatten, die die Schiene halten, Laschen oder ähnlichen Teilen, die Oberflächen aufweisen, die senkrecht zur Bewegungsrichtung liegen. Obwohl die Fixiermittel nicht gleichmäßig verteilt sind, sondern nur in bestimmten Intervallen, liefert die Antenne des verwendeten Dopplerradars bessere Ausgangssignale als bei einer durchgehenden Kiesschicht.

Das Dokument G. Hilger: "Radartechnologie - berührungsfreie Weg- und Geschwindigkeitsmessung für Schienenfahrzeuge", Zeitschrift für Eisenbahnwesen und Verkehrstechnik, Die Eisenbahntechnik, Glasers Annalen, Georg Siemens Verlagsbuchhandlung, Berlin, Bd. 122, Nr. 9/10, 1. September 1998, Seite 533, XP000781633, ISSN: 0941-0589 offenbart die Besonderheiten von Radarsensorik im Schienenfahrzeugbereich mit Darstellungen von Ergebnissen in Felderprobungen allgemein.

Der Erfindung liegt die Aufgabe zugrunde, ein Verfahren zur Positionsbestimmung eines spurgeführten Fahrzeugs, insbesondere eines Schienenfahrzeugs, anzugeben, dass sich mit vergleichsweise geringem Aufwand sicher durchführen lässt.

Zur Lösung dieser Aufgabe wird bei einem Verfahren der eingangs angegebenen Art erfindungsgemäß beim Erfassen des jeweiligen Objekts ein Abstandswert des Fahrzeugs zu dem Objekt mittels Erfassung der Signallaufzeit des empfangenen reflektierten Radarsignals ermittelt und die Geschwindigkeit des Fahrzeugs mittels Erfassung der Frequenzverschiebung eines weiteren, nach einer Zeitdauer nachfolgend empfangenen reflektierten Radarsignals bestimmt; außerdem wird ein weiterer Abstandswert des Fahrzeugs zu dem Objekt mittels Erfassung der Signallaufzeit des weiteren empfangenen reflektierten Radarsignals ermittelt und bei einer Übereinstimmung einer Differenz der Abstandswerte mit einer aus den ermittelten Geschwindigkeiten und der Zeitdauer errechneten Weglänge der weitere Abstandswert zur Positionsbestimmung des Fahrzeugs verwendet.

Dabei werden von dem Fahrzeug aufeinander folgend Radarsignale gesendet, und es wird die Weglänge aus der halben Summe der ermittelten Geschwindigkeiten und der Zeitdauer errechnet, die dem zeitlichen Abstand zwischen dem einen empfangenen reflektierten Radarsignal und dem weiteren empfangenen reflektierten Radarsignal entspricht, wobei diese empfangenen Radarsignale auf dem aufeinander folgend gesendeten Radarsignalen beruhen.

Ein wesentlicher Vorteil des erfindungsgemäßen Verfahrens wird darin gesehen, dass es trotz relativ hoher Genauigkeit mit einem messtechnisch vergleichsweise geringen Aufwand durchführbar ist. Dies ist darauf zurück zu führen, dass sich mit einem Radar sowohl die Geschwindigkeitsmessungen mittels Erfassung von Frequenzverschiebungen (Doppler-Effekt) als auch die Erfassung der Abstandswerte über die Ermittlung der Laufzeiten der Radarsignale durchführen lässt. Das heißt, es werden gleichzeitig zwei physikalisch unabhängige Effekte gemessen und über die Zeit miteinander in Bezug gesetzt und miteinander verglichen und verifiziert. Dadurch eignet sich das Verfahren für Anwendungen mit höchsten signaltechnischen Sicherheitsanforderungen.

Bei dem erfindungsgemäßen Verfahren können Objekte unterschiedlicher Ausführung zum Einsatz kommen; als vorteilhaft wird es angesehen, wenn als Objekte Reflektoren verwendet werden, die neben der Fahrspur aufgestellt sind. Derartige Reflektoren müssen nur in der Lage sein, vom Fahrzeug ausgesendete Radarsignale zum Fahrzeug zu reflektieren.

Bei dem erfindungsgemäßen Verfahren ist es zum Ermitteln der Abstandswerte erforderlich, dass seitens des Fahrzeugs die Position der Objekte bekannt ist. Dazu wird vorteilhafterweise ein digitaler Streckenatlas verwendet, der eine Objekt-Ortsverzeichnisspeicher darstellt.

Als besonders vorteilhaft wird es bei dem erfindungsgemäßen Verfahren angesehen, wenn zur Gewinnung der reflektierten Radarsignale ein Impulsgeber verwendet wird, mit dem eine Radareinrichtung derart gesteuert wird, dass sie Radarsignale in einem vorgegebenen zeitlichen Abstand abgibt. Auf diese Weise lässt sich die Zeitdauer, nach der das weitere empfangene reflektierte Radarsignal auf das eine empfangene reflektierte Radarsignal folgt, messtechnisch genau und relativ einfach ermitteln.

In vorteilhafter Weise kann auf einen Impulsgeber als ein separates Geräteteil verzichtet werden, wenn bei dem erfindungsgemäßen Verfahren als Impulsgeber ein GPS (Global Positioning System)-Empfänger verwendet wird, da GPS oder andere Satellitennavigationssysteme mit periodischen Signalen arbeiten, die hochgenaue Zeitinformation enthalten. Dies ist dann besonders vorteilhaft, wenn das Fahrzeug aus anderen Gründen bereits mit einem GPS-Empfänger ausgerüstet ist.

Das erfindungsgemäße Verfahren kommt in einer Grundausführung damit aus, dass die reflektierten empfangenen Radarsignale mittels in Fahrtrichtung vor dem Fahrzeug liegender Objekte gewonnen werden und zusätzlich eine Initialisierungseinrichtung und ein Richtungsgeber verwendet werden. In diesem Falle müssen die Objekte beispielsweise in einer Ausführung als Reflektoren nur jeweils auf einer Seite Reflexionsflächen aufweisen. Solche Reflektoren in der beschriebenen Anordnung gehören zum Inhalt der älteren deutschen Patentanmeldung 10 2013 219 805.1.

Bei einer besonders vorteilhaften Ausführungsform des erfindungsgemäßen Verfahrens werden die gesendeten Radarsignale von dem einen Ende des Fahrzeugs und von dem anderen Ende des Fahrzeugs ausgestrahlt, und Objekte in Fahrtrichtung des Fahrzeugs und weitere Objekte in Gegenrichtung werden jeweils in einem Objekte-Abstand verwendet.

Es ist zwar aus der internationalen Patentanmeldung WO 2011/076512 A1 bekannt, die Entfernungen zwischen dem einen Ende eines Zugverbandes und einer ersten Streckeneinrichtung und zwischen dem anderen Ende des Zugverbandes und einer zweiten Streckeneinrichtung radarbasiert zu bestimmen, jedoch ist dieses bekannte Verfahren dazu vorgesehen, aus den ermittelten Entfernungen eine Kenngröße für die Länge des Zugverbands zu ermitteln, um damit den Zugverband auf Vollständigkeit zu überwachen.

Ferner ist aus der internationalen Patentanmeldung WO 2005/056363 A1 ein Verfahren zur Positionserfassung eines Schienenfahrzeugs bekannt, bei dem gleichzeitig vom Zuganfang und vom Zugende aus Strahlen zu zwei jeweils einen Signalblock bildenden Strahlenreflektoren am Fahrweg gesendet und die reflektierten Strahlen von einer Auswerteeinrichtung des Schienenfahrzeugs empfangen und unter Erfassung ihrer Laufzeitdifferenz zur Bestimmung der Position des Schienenfahrzeugs innerhalb des jeweiligen Signalblocks herangezogen werden, jedoch erfolgt hier die Positionsbestimmung allein mittels Auswertung der Laufzeitdifferenz der reflektierten Strahlen, bei denen es sich um Radiosignale handelt. Mit diesem bekannten Verfahren lassen sich für alle denkbaren Einsatzfälle bestehende Sicherheitsvorschriften nicht erfüllten.

Es ist außerdem aus dem "PRIOR ART JOURNAL", 2014#04, Seiten 125 bis 128 der Siemens AG ein Verfahren bekannt, bei dem Radarstrahlen von beiden Enden eines Schienenfahrzeus ausgesendet und ggf. reflektierte Radarstrahlen auch an beiden Enden empfangen werden, jedoch wird bei diesem Verfahren nur mit einem einzigen Reflektor gearbeitet, der im Bereich einer Weiche angeordnet ist und dazu dient, eine Beanspruchung der Weiche durch ein Fahrzeug zu erkennen.

Bei der oben gerade beschriebenen Ausführungsform des erfindungsgemäßen Verfahrens wird wiederum davon ausgegangen, dass die Standorte der Objekte bzw. Reflektoren dem Fahrzeug bekannt und beispielsweise in einer digitalen Karte hinterlegt sind. Damit kann auch der Abstand zwischen zwei aufeinanderfolgend an der Fahrspur angeordneten Objekten bzw. Reflektoren (Objekte-Abstand bzw. ein sog. Block) bestimmt werden und zusätzlich oder alternativ in der digitalen Karte hinterlegt sein.

Ein sicherheitsrelevanter Vorteil dieser Ausführungsform des erfindungsgemäßen Verfahrens besteht darin, dass mit der in der Regel ebenfalls bekannten Länge des Fahrzeugs und der Messung von Abständen mittels Radarsignalen von dem einen und dem anderen Ende des Fahrzeugs zu den Objekten in dem jeweiligen Objekte-Abstand bzw. Block die ermittelten Abstände nach vorn und nach hinten zu den dort befindlichen Objekten und die Fahrzeuglänge in Summe gleich dem jeweiligen Objekte-Abstand bzw. Block sein müssen. Ist dies nicht der Fall, dann ist von einem Defekt in der Positionsbestimmung auszugehen und das Fahrzeug muss als delokalisiert betrachtet werden.

Ein weiterer Vorteil dieser Ausführungsform besteht in der hohen Güte der Positionsbestimmung, weil jeweils zwei Objekte in dem jeweiligen Objekte-Abstand in die Positionsbestimmung einbezogen werden.

Ein weiterer Vorteil dieser Ausführungsform besteht darin, dass durch die Korrelation der Messwerte der beiden Radareinrichtungen die korrekte Funktion beider Geräte überwacht werden kann und nach der Initialisierung der Positionsbestimmung nur noch eine Radareinrichtung benötigt wird und bei Ausfall der ersten Radareinrichtung die zweite Radareinrichtung die Verfügbarkeit des Systems signifikant erhöht.

Bei dem erfindungsgemäßen Verfahren können die jeweils zwei im Objekte-Abstand angeordneten bzw. einen Block bildenden Objekte in unterschiedlicher Weise zur Positionsbestimmung herangezogen werden. So wird es als vorteilhaft angesehen, wenn jeweils mittels des Objekts in Fahrtrichtung und des weiteren Objekts in Gegenrichtung der eine Abstandswert und der weitere Abstandswert ermittelt werden und mittels des Objekts in Fahrtrichtung die eine Geschwindigkeit des Fahrzeugs und mittels des weiteren Objekts in Gegenrichtung die weitere Geschwindigkeit gemessen werden und anhand des einen Abstandswertes und des weiteren Abstandswertes und der einen und der weiteren Geschwindigkeit des Fahrzeugs jeweils für sich Abstände des Fahrzeugs von den Objekten in einem Objekte-Abstand bzw. in dem jeweiligen Block ermittelt werden.

Es kann aber auch vorteilhaft sein, wenn jeweils mittels eines Objekts in Fahrtrichtung der eine und der weitere Abstandswert ermittelt und mittels jeweils eines weiteren Objekts in Gegenrichtung die eine und die weitere Geschwindigkeiten gemessen werden und anhand des einen Abstandswertes und des weiteren Abstandswertes und der einen und der weiteren Geschwindigkeit des Fahrzeugs jeweils für sich Abstände des Fahrzeugs von den Objekten in einem Objekte-Abstand bzw. in einem Block ermittelt werden.

Dabei besteht in vorteilhafter Weise die Möglichkeit, die ermittelten Abstände des Fahrzeugs im jeweiligen Objekte-Abstand unter Einbeziehung der bekannten Länge des Fahrzeugs mit dem jeweils bekannten Objekte-Abstand bzw. Block zu vergleichen und bei Unterschieden ein Defekt-Signal zu erzeugen.

Wird bei dem erfindungsgemäßen Verfahren mit ausgesendeten Radarsignalen in Fahrtrichtung und in Gegenfahrtrichtung gearbeitet, dann ist es vorteilhaft, die Radarsignale synchron, beispielsweise mittels eine GPS-Empfängers, auszusenden, weil dann der Auswertevorgang relativ einfach ist.

Es ist aber auch möglich, das erfindungsgemäße Verfahren mit asynchron gesendeten Radarsignalen durchzuführen; dies erfordert aber einen höheren Auswerteaufwand und verzögert die Positionsbestimmung etwas.

Wird - wie oben erwähnt - zur Synchronisation ein GPS-Empfänger eingesetzt, dann kann dieser vorteilhafterweise auch zur initialen Ortsbestimmung verwendet werden, da beim Start zu einer Fahrt des Fahrzeugs, speziell eines Schienenfahrzeugs von einem Depot aus, nur wenige Objekte-Abstände bzw. Blöcke als Standort für das Schienenfahrzeug in Frage kommen. Selbst bei Untergrundbahnen liegt der Depotbereich meist oberirdisch, und hier starten meistens die Züge.

Es ist oben bereits erwähnt worden, dass das erfindungsgemäße Verfahren mit in Fahrtrichtung und in Gegenfahrtrichtung zu in jeweils einem Objekte-Abstand angeordneten Objekten den Vorteil einer sehr genauen Positionsbestimmung bietet. Dies lässt sich in vorteilhafter Weise in Stationen ausnutzen, bei denen der Zugang zu einem Schienenfahrzeug nur an genau vorgegebenen Stellen zugelassen ist, indem zur Positionsbestimmung eines als Schienenfahrzeug ausgebildeten Fahrzeugs in einer Station am Anfang und am Ende der Station jeweils ein Objekt verwendet wird. Der Objekte-Abstand entspricht in diesem Falle der Länge der Station.

Als vorteilhaft wird es ferner angesehen, wenn jeweils unterschiedlich lange Objekte-Abstände verwendet werden, also die jeweils Objekte-Abstände bzw. Blöcke bildenden Objekte unterschiedlich weit voneinander angeordnet werden. Wird dann die Länge des jeweiligen Objekte-Abstands erfindungsgemäß bestimmt, ist damit auch die Position des jeweiligen Objekte-Abstands bzw. Blocks ermittelt, weil jedem Block mittels seiner spezifischen Länge eine Position zugeordnet und im Streckenatlas hinterlegt ist.

Es wird auch als vorteilhaft erachtet, wenn alternativ mittels einer GPS-Empfangsanordnung und des digitalen Streckenatlas eine objekte-abstände-genaue Positionsbestimmung des Fahrzeugs durchgeführt wird, indem jeweils benachbarte Objekte-Abstände mit unterschiedlicher Länge verwendet werden.

In ähnlicher Weise ist auch eine Fahrtrichtungsbestimmung möglich, indem bei einer Fahrstrecke mit unterschiedlich langen Abständen zwischen den Objekten mit Hilfe des digitalen Streckenatlas eine eindeutige Aussage über die Fahrtrichtung getroffen werden kann.

Bei einer weiteren vorteilhaften Ausgestaltung des erfindungsgemäßen Verfahrens werden zu einer initialen Positionsbestimmung des Fahrzeugs mindestens ein initiales erstes Objekt und mindestens ein initiales zweites Objekt verwendet werden, die sich in ihrer Ausgestaltung von den ersten und zweiten Objekten entlang des Fahrweges des Fahrzeugs unterscheiden. In vorteilhafter Weise wird dazu zusätzlich der digitale Streckenatlas verwendet.

Ferner wird es zur initialen Positionsbestimmung als vorteilhaft angesehen, wenn als initiale Objekte jeweils zwei neben dem Fahrweg hintereinander, in unterschiedlichen Abständen angeordnete Initialobjekte verwendet werden.

Dabei können in vorteilhafter Weise die Initialobjekte neben dem Fahrweg so angeordnet sein, dass sie eine unterschiedliche Winkelstellung zu Objekten an einem parallel verlaufenden weiteren Fahrweg einnehmen.

Das erfindungsgemäße Verfahren bietet ferner die vorteilhafte Möglichkeit, mit ihm Funktionen der Fahrzeugsicherung und der Fahrzeugsteuerung zu übernehmen.

Eine vorteilhafte Anwendung des erfindungsgemäßen Verfahrens wird bei einem Schienennetz mit Strecken mit gleisverzweigungsfreien Streckenabschnitten und Strecken mit behindertem GPS-Empfang gesehen, indem auf Streckenabschnitten mit behindertem GPS-Empfang das erfindungsgemäße Verfahren eingesetzt wird, während die Position des Schienenfahrzeugs auf verzweigungsfreien Streckenabschnitten mittels GPS-Signalen und dem digitalen Streckenatlas ermittelt wird. Diese Anwendung hat den Vorteil, dass eine Positionsbestimmung mit relativ wenigen Objekten möglich ist, weil das erfindungsgemäße Verfahren nur dort eingesetzt wird, wo der GPS-Empfang behindert ist, also beispielsweise in Tunnels und Geländeeinschnitten.

Die Erfindung betrifft ferner ein System zur Positionsbestimmung eines spurgeführten Fahrzeugs, insbesondere eines Schienenfahrzeugs, auf seinem Fahrweg mit Objekten in bekannter Position entlang des Fahrweges und mit einer Ortungseinrichtung mit zugeordneter Radareinrichtung, die geeignet ist, die Geschwindigkeit des Fahrzeugs mittels Erfassung der Frequenzverschiebung eines empfangenen reflektierten Radarsignals zu ermitteln. Ein solches System lässt sich der eingangs behandelten europäischen Patentanmeldung EP 0 761 522 A1 entnehmen.

Um ein solches System mit vergleichsweise geringem Aufwand einrichten zu können, ist erfindungsgemäß die Radareinrichtung ferner geeignet, einen Abstandswert des Fahrzeugs zu dem Objekt mittels Erfassung der Signallaufzeit des empfangenen reflektierten Radarsignals zu ermitteln und die Geschwindigkeit des Fahrzeugs in Bezug auf das jeweilige Objekt mittels Erfassung der Frequenzverschiebung eines weiteren, nach einer Zeitdauer nachfolgend empfangenen reflektierten Radarsignals zu bestimmten sowie einen weiteren Abstandswert des Fahrzeugs zu dem Objekt mittels Erfassung der Signallaufzeit des empfangenen reflektierten Radarsignals zu ermitteln; die Ortungseinrichtung ist geeignet, bei einer Übereinstimmung einer Differenz der Abstandswerte mit einer aus den ermittelten Geschwindigkeiten und der Zeitdauer errechneten Weglänge den weiteren Abstandswert zur Positionsbestimmung des Fahrzeugs zu verwenden.

Dabei werden von dem Fahrzeug aufeinander folgend Radarsignale gesendet und es wird von der Ortungseinrichtung die Weglänge aus der halben Summe der ermittelten Geschwindigkeiten und der Zeitdauer errechnet, die dem zeitlichen Abstand zwischen dem einen empfangenen reflektierten Radarsignal und dem weiteren empfangenen reflektierten Radarsignal entspricht, wobei die empfangenen Radarsignale auf den aufeinander folgend gesendeten Radarsignalen beruhen.

Mit dem erfindungsgemäßen System lassen sich sinngemäß dieselben Vorteile erzielen, wie sie oben zum erfindungsgemäßen Verfahren angeführt sind.

In dem erfindungsgemäßen System können Objekte unterschiedlicher Ausführung zum Einsatz kommen; als vorteilhaft wird es angesehen, wenn als Objekte Reflektoren verwendet werden, die neben dem Fahrweg aufgestellt sind. Derartige Reflektoren müssen nur in der Lage sein, vom Fahrzeug ausgesendete Radarsignale zum Fahrzeug zu reflektieren.

Bei dem erfindungsgemäßen System ist es zum Ermitteln der Abstandswerte erforderlich, dass seitens des Fahrzeugs die Position der Objekte bekannt ist. Dazu wird in der Ortungseinrichtung vorteilhafterweise ein digitaler Streckenatlas vorgesehen, der einen Objekt-Ortsverzeichnisspeicher darstellt.

Die mit dem erfindungsgemäßen System verbundenen Vorteile sind im Zusammenhang mit der oben angeführten Erläuterung des erfindungsgemäßen Verfahrens bereits ausführlich angegeben worden. Diese Vorteile gelten entsprechend auch für das anmeldungsgemäße System und werden an dieser Stelle deswegen nicht noch einmal erläutert.

Es ist oben bereits erwähnt worden, dass das erfindungsgemäße System mit in Fahrtrichtung und in Gegenfahrtrichtung zu in jeweils einem Objekte-Abstand angeordneten Objekten den Vorteil einer sehr genauen Positionsbestimmung bietet. Dies lässt sich in vorteilhafter Weise in Stationen ausnutzen, bei denen der Zugang zu einem Schienenfahrzeug nur an genau vorgegebener Stelle zugelassen ist, indem zur Positionsbestimmung eines als Schienenfahrzeug ausgebildeten Fahrzeugs in einer Station am Anfang und am Ende der Station jeweils ein Objekt angeordnet ist. Der Objekte-Abstand entspricht in diesem Falle der Länge der Station.

Als vorteilhaft wird es ferner angesehen, wenn bei dem erfindungsgemäßen System die jeweils Objekte-Abstände bzw. Blöcke bildenden Objekte unterschiedlich weit voneinander angeordnet an der Fahrspur angeordnet sind. Wird dann die Länge des jeweiligen Objekte-Abstands erfindungsgemäß bestimmt, ist damit auch die Position des Objekte-Abstands bzw. Blocks ohne Weiteres ermittelt, weil jedem Block mittels seiner spezifischen Länge eine Position zugeordnet und im Streckenatlas der Ortungseinrichtung hinterlegt ist.

Es wird auch als vorteilhaft erachtet, wenn alternativ die Ortungseinrichtung geeignet ist, mittels einer an sie angeschlossenen GPS-Empfangsanordnung und des digitalen Streckenatlas eine objekte-abstände-genaue Positionsbestimmung des Fahrzeugs durchzuführen, indem jeweils benachbarte Objekte-Abstände mit unterschiedlicher Länge vorgesehen sind.

Bei einer weiteren vorteilhaften Ausgestaltung des erfindungsgemäßen Systems sind zu einer initialen Positionsbestimmung des Fahrzeugs mindestens ein initiales erstes Objekt und mindestens ein initiales zweites Objekt vorgesehen, die sich in ihrer Ausgestaltung von den ersten und zweiten Objekten entlang des Fahrweges des Fahrzeugs unterscheiden. In vorteilhafter Weise wird dazu zusätzlich der digitale Streckenatlas verwendet.

Ferner wird es zur initialen Positionsbestimmung als vorteilhaft angesehen, wenn die initialen Objekte jeweils zwei neben dem Fahrweg hintereinander, in unterschiedlichen Abständen angeordnete Initialobjekte sind.

Dabei können in vorteilhafter Weise die Initialobjekte neben dem Fahrweg so angeordnet sein, dass sie eine unterschiedliche Winkelstellung zu Objekten an einem parallel verlaufenden weiteren Fahrweg einnehmen.

Zur weiteren Erläuterung der Erfindung ist in

Fig. 1 ein Ausführungsbeispiel des erfindungsgemäßen Systems mit einer Radareinrichtung am Fahrzeug, in

Fig. 2 ein weiteres Ausführungsbeispiel des erfindungsgemäßen Systems mit zwei Radareinrichtungen am Fahrzeug und in

Fig. 3 eine Draufsicht auf ein Ausführungsbeispiel des erfindungsgemäßen Systems zur initialen Positionsbestimmung dargestellt.

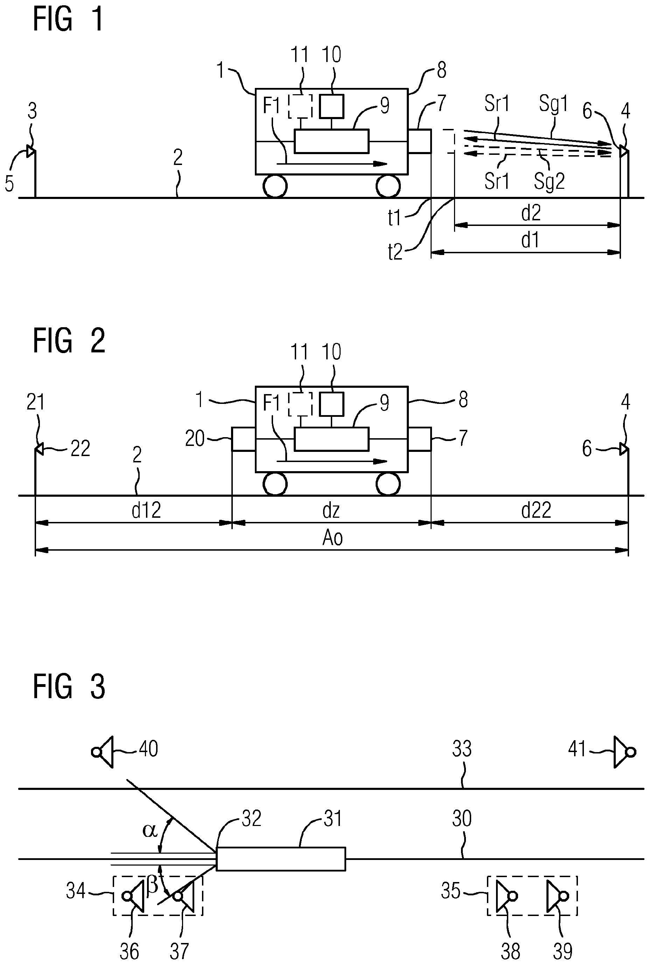

Das schematisch dargestellte Ausführungsbeispiel nach Fig. 1 zeigt als Fahrzeug 1 ein Schienenfahrzeug, dass sich auf einem als Gleis ausgebildeten Fahrweg 2 in einer durch einen Pfeil F1 gekennzeichneten Richtung bewegt. Das Fahrzeug 1 hat in der dargestellten Position bereits ein erstes Objekt 3 passiert, bei dem es sich um einen Reflektor für Radarsignale handeln kann. Vor dem Fahrzeug 1 befindet sich in der gezeigten Position ein weiteres Objekt 4, das ebenfalls ein Reflektor für Radarsignale sein kann. Die Objekte 3 und 4 sowie weitere, nicht gezeigte Objekte neben dem Fahrweg 2 sind so angeordnet, dass ihre reflektierenden Flächen entgegengesetzt zur Fahrtrichtung F ausgerichtet sind.

Das Fahrzeug 1 ist mit einer Radareinrichtung 7 ausgerüstet, die an einer Front 8 des Fahrzeugs angebracht ist. Die Radareinrichtung 7 ist an eine Ortungseinrichtung 9 angeschlossen, mit der auch ein Impulsgeber 10 verbunden ist. Anstelle des Impulsgers 10 oder zusätzlich kann ein GPS-Empfänger 11 mit der Ortungseinrichtung 9 verbunden sein.

Mit diesem System wird das erfindungsgemäße Verfahren in folgender Weise durchgeführt:
Befindet sich das Fahrzeug 1 in der dargestellten Position, dann wird - initiiert durch den Impulsgeber 10 oder den GPS-Empfänger 11 - von der Radareinrichtung 7 ein Radarsignal Sgl ausgesendet. Das ausgesendete Radarsignal Sgl wird von dem Objekt 4 reflektiert und von der Radareinrichtung 7 zum Zeitpunkt t1 als empfangenes, reflektiertes Radarsignal Sr1 aufgenommen.

Das empfangene, reflektierte Signal Sr1 wird hinsichtlich Frequenzverschiebungen (Doppler-Effekt) in Bezug auf das gesendete Radarsignal Sgl untersucht und dabei die Geschwindigkeit v1 des Fahrzeugs 1 zum Zeitpunkt t1 ermittelt. Außerdem wird mittels des empfangenen, reflektierten Signals Sr1 die Laufzeit des Radarsignals zum Objekt 4 und zurück zur Radareinrichtung 7 des Fahrzeugs 1 gemessen und daraus ein Abstandswert d1 bestimmt, der dem Abstand des Fahrzeugs 1 zum Objekt 4 im Zeitpunkt t1 entspricht.

Zu einem vom Impulsgeber 10 bestimmten bzw. mittels des GPS-Empfängers 11 festgelegten Zeitpunkt und wird von der Radareinrichtung 7 ein weiteres Radarsignal Sg2 zu dem Objekt 4 gesendet und von dort zur Radareinrichtung 7 reflektiert; hier wird es als ein weiteres, nach einer Zeitdauer Td auf das eine reflektiertes Radarsignal SR1 nachfolgend zum Zeitpunkt t2 empfangenes reflektiertes Radarsignal Sr2 aufgenommen. Dabei ist die Zeitdauer Td gegeben durch die Zeit zwischen den beiden Zeitpunkten t1 und t2.

Anschließend erfolgt eine Auswertung des weiteren empfangenen Radarsignals Sr2 in der gleichen Weise, wie es oben bezüglich der Auswertung des einen reflektierten Radarsignals Sr1 beschrieben ist. Es ergibt sich dann aus der Auswertung der Frequenzverschiebung eine Geschwindigkeit v2 des Fahrzeugs 1 zum Zeitpunkt t2 und ein weiterer Abstandswert d2, der dem Abstand des Fahrzeugs vom Objekt 4 zum Zeitpunkt t2 entspricht.

Arbeitet das System korrekt bzw. läuft das erfindungsgemäße Verfahren korrekt ab, dann muss gelten:

$$\left| d1 - d2 \right| = \frac{1}{2} \bullet (v1 + v2) \bullet \left| (t1 - t2) \right|$$

D.h. die während der Zeitdauer Td bzw. zwischen den Zeitpunkten t1 und t2 zurückgelegte Wegstrecke d1-d2 ist in diesem Fall gleich der mittleren Geschwindigkeit während der Zeitdauer Td multipliziert mit der Zeitdauer Td. Dies wird in der Ortungseinrichtung 9 berechnet. Gilt die Beziehung, dann gibt der weitere Abstandswert d2 den Abstand des Fahrzeugs 1 zum Objekt 4 an. Da die Position des Objekts 4 in einem Streckenatlas in der Ortungseinrichtung 9 hinterlegt ist, kann die Ortungseinrichtung mit dem Abstandswert d2 die Position des Fahrzeugs 1 genau bestimmen.

Bei dem Ausführungsbeispiel nach Fig. 2, in der mit dem Ausführungsbeispiel nach Fig. 1 übereinstimmende Teile mit den gleichen Bezugszeichen versehen sind, ist das Fahrzeug 1 ergänzend mit einer weiteren Radareinrichtung 20 am Ende des Fahrzeugs 1 versehen. Ein weiteres Objekt 21, beispielsweise ein Reflektor, ist hier in einem Objekte-Abstand Ao von dem einen Objekt 4 angeordnet, und zwar so, dass seine reflektierende Oberfläche 22 in Fahrtrichtung F ausgerichtet ist. Der Objekte-Abstand Ao beschreibt somit einen Block des Fahrwegs 2.

In gleicher Weise wie oben zur Fig. 1 beschrieben, wird hier mittels des Objekts 4 in Fahrtrichtung F1 zu einem Zeitpunkt t1 und mittels des weiteren Objekt 21 in Gegenrichtung zu einem Zeitpunkt t2 ein Abstandswert d22 nach vorn und ein weiterer Abstandswert d12 nach hinten ermittelt und mittels des Objekts 4 in Fahrtrichtung F1 zum Zeitpunkt t1 die eine Geschwindigkeit v1 des Fahrzeugs 1 und mittels des weiteren Objekts 22 in Gegenrichtung zum Zeitpunkt t2 die weitere Geschwindigkeit v2 gemessen. Unter Berücksichtigung der der Ortungseinrichtung 9 bekannten Zuglänge dz wird dann von der Ortungseinrichtung 9 auf der Basis der oben angegebenen Gleichung überprüft, ob die obige Beziehung erfüllt ist. Gegebenenfalls wird dann mit dem einen oder dem weiteren Abstandswert d12 bzw. d22 unter Berücksichtigung der Schienenfahrzeuglänge dz ein Abstand d22 von dem einen Objekt 4 zum Zeitpunkt t2 bestimmt.

Bei diesem Ausführungsbeispiel des erfindungsgemäßen Systems kann auch gleichzeitig während der Fahrt ständig überprüft werden, ob das Schienenfahrzeug noch vollständig ist. Dies geschieht durch Addition der Zuglänge dz, des Abstands d22 zum Objekt 4 und eines Abstands d12 zum weiteren Objekt 21. Diese Summe muss nämlich im Normalfall mit dem in der Ortungseinrichtung 9 hinterlegten Objekte-Abstand Ao übereinstimmen. Ist dies nicht der Fall, dann ist das Schienenfahrzeug 1 nicht vollständig.

Bei dem Ausführungsbeispiel nach Fig. 3 befindet sich auf einem Gleis bzw. einem Fahrweg 30 ein als Schienenfahrzeug ausgebildetes Fahrzeug 31, das an einem Ende eine nicht gezeigte Radareinrichtung aufweist. Parallel zu dem einen Fahrweg 30 verläuft ein weiterer Fahrweg 33. Neben dem einen Fahrweg 30 außerhalb des Bereichs zwischen den Fahrspuren 30 und 33 sind ein erstes initiales Objekt 34 und ein zweites initiales Objekt 35 vorhanden. Jedes dieser initialen Objekte 34 und 35 besteht in dem gezeigten Ausführungsbeispiel aus jeweils zwei Reflektoren 36,37 und 38,39 und zwar jeweils in einer derartigen Anordnung und mit einer derartigen Ausrichtung ihrer reflektierenden Flächen, dass eine Initialisierung in beiden Fahrtrichtungen möglich ist. Um hinsichtlich der Fahrtrichtung eine Unterscheidung zu gewährleisten, bestehen zwischen den Reflektoren 36 und 37 sowie 38 und 39 unterschiedliche Abstände.

In einem Bereich außerhalb der beiden Fahrwege 30 und 33 liegen neben dem weiteren Fahrweg 33 Objekte 40 und 41 in einer Anordnung, wie sie in Fig. 2 gezeigt ist. Hierbei ist darauf geachtet, dass sich die von der Radareinrichtung des Schienenfahrzeugs 31 zu den initialen Objekten 34 bzw. 35 und zu den Objekten 40 und 41 neben dem Fahrweg 33 anderseits gemessenen Winkel α und β voneinander unterscheiden.

**Patentansprüche**

1. Verfahren zur Positionsbestimmung eines spurgeführten Fahrzeugs (1), insbesondere eines Schienenfahrzeugs, mittels Objekten (4) in bekannter Position entlang des Fahrweges (2) des Fahrzeugs (1), bei dem zur Positionsbestimmung des Fahrzeugs (1) in Bezug auf das jeweilige Objekt (4) mittels Radar die jeweilige Geschwindigkeit (v1) des Fahrzeugs (1) mittels Erfassung der Frequenzverschiebung eines empfangenen reflektierten Radarsignals (Sr1) ermittelt und das jeweilige Objekt erfasst wird, **dadurch gekennzeichnet, dass**

   beim Erfassen des jeweiligen Objekts (1) ein Abstandswert (d1) des Fahrzeugs (1) zu dem Objekt (4) mittels Erfassung der Signallaufzeit des empfangenen reflektierten Radarsignals (Sr1) ermittelt wird, die Geschwindigkeit (v2) des Fahrzeugs mittels Erfassung der Frequenzverschiebung eines weiteren, nach einer Zeitdauer (Td) nachfolgend empfangenen reflektierten Radarsignals (Sr2) bestimmt wird, ein weiterer Abstandswert (d2) des Fahrzeugs (1) zu dem Objekt (4) mittels Erfassung der Signallaufzeit des weiteren empfangenen reflektierten Radarsignals (Sr2) ermittelt wird und

bei einer Übereinstimmung einer Differenz der Abstandswerte (d1,d2) mit einer aus den ermittelten Geschwindigkeiten (v1, v2) und der Zeitdauer (Td) errechneten Weglänge der weitere Abstandswert (d2) zur Positionsbestimmung des Fahrzeugs (1) verwendet wird.

2. Verfahren nach Anspruch 1,
**dadurch gekennzeichnet, dass**
zur Berücksichtigung der Position der Objekte (4) ein digitaler Streckenatlas verwendet wird.

3. Verfahren nach Anspruch 1 oder 2,
**dadurch gekennzeichnet, dass** zur Gewinnung der reflektierten Radarsignale (Sr1,Sr2) ein Impulsgeber (10) verwendet wird, mit dem eine Radareinrichtung (7) derart gesteuert wird, dass sie Radarsignale (Sg1,Sg2) in einem vorgegebenen zeitlichen Abstand abgibt.

4. Verfahren nach Anspruch 3,
**dadurch gekennzeichnet, dass**
als Impulsgeber ein GPS-Empfänger verwendet wird.

5. Verfahren nach einem der vorangehenden Ansprüche,
**dadurch gekennzeichnet, dass**
die reflektierten empfangenen Radarsignale mittels in Fahrtrichtung vor dem Fahrzeug liegenden Objekten gewonnen werden und zusätzlich eine Initialisierungseinrichtung und ein Richtungsgeber verwendet werden.

6. Verfahren nach einem der Ansprüche 1 bis 4,
**dadurch gekennzeichnet, dass**
die Radarsignale von dem einen Ende des Fahrzeugs (1) und von dem anderen Ende des Fahrzeugs 81) ausgestrahlt werden und Objekte (4) in Fahrtrichtung (F1) des Fahrzeugs (1) und weitere Objekte (22) in Gegenrichtung jeweils in einem Objekte-Abstand (Ao) verwendet werden.

7. Verfahren nach Anspruch 6,
**dadurch gekennzeichnet, dass**
jeweils mittels des Objekts (4) in Fahrtrichtung (F1) und des weiteren Objekts (22) in Gegenrichtung der eine Abstandswert (d22) und der weitere Abstandswert (d12) ermittelt werden und mittels des Objekts (4) in Fahrtrichtung (F1) die eine Geschwindigkeit des Fahrzeugs (1) und mittels des weiteren Objekts (22) in Gegenrichtung die weitere Geschwindigkeit gemessen wird und

anhand des einen Abstandswertes (d22) und des weiteren Abstandswertes (d12) und der einen und der weiteren Geschwindigkeit des Fahrzeugs (1) jeweils für sich Abstände (d12,d22) des Fahrzeugs (1) von den Objekten (4,22) in einem Objekte-Abstand (Ao) ermittelt werden.

8. Verfahren nach Anspruch 6,
**dadurch gekennzeichnet, dass**
jeweils mittels eines Objekts in Fahrtrichtung der eine und der weitere Abstandswert ermittelt und mittels jeweils eines weiteren Objekts in Gegenrichtung die eine und die weitere Geschwindigkeiten gemessen werden und

anhand des einen Abstandswertes und des weiteren Abstandswertes und der einen und der weiteren Geschwindigkeit des Fahrzeugs jeweils für sich Abstände des Fahrzeugs von den Objekten in einem Objekte-Abstand ermittelt werden.

9. Verfahren nach Anspruch 6 bis 8,
**dadurch gekennzeichnet, dass**
die ermittelten Abstände (d12,d22) des Fahrzeugs (1) im jeweiligen Objekte-Abstand (Ao) unter Einbeziehung der bekannten Länge (dz) des Fahrzeugs (1) mit dem jeweils bekannten Objekte-Abstand (Ao) verglichen werden und bei Unterschieden ein Defekt-Signal erzeugt wird.

10. Verfahren nach einem der Ansprüche 6 bis 9,
**dadurch gekennzeichnet, dass**
zur Positionsbestimmung eines als Schienenfahrzeug ausgebildeten Fahrzeugs in einer Station, bei der der Zugang zu einem Schienenfahrzeug nur an genau vorgesehenen Stellen vorgesehen ist, am Anfang und am Ende der Station jeweils ein Objekt verwendet wird.

11. Verfahren nach einem der Ansprüche 6 bis 9,
**dadurch gekennzeichnet, dass**
jeweils unterschiedlich lange Objekte-Abstände (Ao) verwendet werden.

12. Verfahren nach einem der Ansprüche 6 bis 10,
**dadurch gekennzeichnet,dass**
zu einer initialen Positionsbestimmung des Fahrzeugs (31) mindestens ein erstes initiales Objekt (34) und mindestens ein zweites initiales Objekt (35) verwendet werden, die sich in ihrer Ausgestaltung von den ersten und zweiten Objekten entlang des Fahrweges des Fahrzeugs (1) unterscheiden.

13. Anwendung des Verfahrens nach einem der vorangehenden Ansprüche bei einem Schienennetz mit Strecken mit gleisverzweigungsfreien Streckenabschnitten und Strecken mit behindertem GPS-Empfang auf Streckenabschnitten mit behindertem GPS-Empfang, während die Position des Schienenfahrzeugs auf verzweigungsfreien Streckenabschnitten mittels GPS-Signalen und dem digitalen Streckenatlas ermittelt wird.

**14.** System zur Positionsbestimmung eines spurgeführten Fahrzeugs (1), insbesondere eines Schienenfahrzeugs, auf seinem Fahrweg (2), mit Objekten (4) in bekannter Position entlang des Fahrweges (2) und mit einer Ortungseinrichtung (9) mit zugeordneter Radareinrichtung (7), die ausgelegt ist, die Geschwindigkeit (v1) des Fahrzeugs (1) mittels Erfassung der Frequenzverschiebung eines empfangenen reflektierten Radarsignals (Sr1) zu ermitteln, **dadurch gekennzeichnet, dass** die Radareinrichtung (7) ferner ausgelegt ist, einen Abstandswert (d1) des Fahrzeugs (1) zu dem Objekt (4) mittels Erfassung der Signallaufzeit des empfangenen reflektierten Radarsignals (Sr1) zu ermitteln und die Geschwindigkeit (v2) des Fahrzeugs (1) mittels Erfassung der Frequenzverschiebung eines weiteren, nachfolgend empfangenen reflektierten Radarsignals (Sr2) zu bestimmen sowie einen weiteren Abstandswert (d2) des Fahrzeugs (1) zu dem Objekt (4) mittels Erfassung der Signallaufzeit des empfangenen reflektierten Radarsignals (Sr2) zu ermitteln, und die Ortungseinrichtung (9) ausgelegt ist, bei Übereinstimmung einer Differenz der ermittelten Abstandswerte (d1,d2) mit einer aus den ermittelten Geschwindigkeiter (v1, v2) und der Zeitdauer errechneten Weglänge den weiteren Abstandswert (d2) zur Positionsbestimmung des Fahrzeugs zu verwenden.

**Claims**

**1.** Method for determining the position of a track-bound vehicle (1), in particular a rail vehicle, by means of objects (4) at known positions along the route (2) of the vehicle (1), in which, in order to determine the position of the vehicle (1) in relation to the respective object (4) by means of radar, the respective speed (v1) of the vehicle (1) is ascertained by means of recording the frequency shift of a received reflected radar signal (Sr1) and the respective object is recorded, **characterised in that** when recording the respective object (1), a distance value (d1) of the vehicle (1) in relation to the object (4) is ascertained by means of recording the signal transit time of the received reflected radar signal (Sr1), the speed (v2) of the vehicle is determined by means of recording the frequency shift of a further received reflected radar signal (Sr2) that follows after a period of time (Td), a further distance value (d2) of the vehicle (1) in relation to the object (4) is ascertained by means of recording the signal transit time of the further received reflected radar signal (Sr2) and if a difference between the distance values (d1,d2) matches a path length calculated from the ascertained speeds (v1,v2) and the period of time (Td), then the further distance value (d2) is used to determine the position of the vehicle (1).

**2.** Method according to claim 1, **characterised in that** a digital route map is used to take into consideration the position of the objects (4).

**3.** Method according to claim 1 or 2, **characterised in that** in order to obtain the reflected radar signals (Sr1,Sr2), a pulse encoder (10) is used, with which a radar facility (7) can be controlled such that it emits radar signals (Sg1,Sg2) with a predefined temporal spacing.

**4.** Method according to claim 3, **characterised in that** a GPS receiver is used as pulse encoder.

**5.** Method according to one of the preceding claims, **characterised in that** the reflected received radar signals are obtained by means of objects lying ahead of the vehicle in the direction of travel and additionally an initialisation facility and a direction encoder are used.

**6.** Method according to one of claims 1 to 4, **characterised in that** the radar signals are broadcast from the one end of the vehicle (1) and from the other end of the vehicle (1) and objects (4) in the direction of travel (F1) of the vehicle (1) and further objects (22) in the opposite direction at an object distance (Ao) in each case are used.

**7.** Method according to claim 6, **characterised in that** the one distance value (d22) and the further distance value (d12) are ascertained by means of the object (4) in the direction of travel (F1) and the further object (22) in the opposite direction in each case and the one speed of the vehicle (1) is measured by means of the object (4) in the direction of travel (F1) and the further speed is measured by means of the further object (22) in the opposite direction and distances (d12,d22) of the vehicle (1) from the objects (4,22) at an object distance (Ao) are ascertained per se in each case on the basis of the one distance value (d22) and the further distance value (d12) and the one speed and the further speed of the vehicle (1).

**8.** Method according to claim 6,

**characterised in that**

the one distance value and the further distance value are ascertained in each case by means of an object in the direction of travel and the one speed and the further speeds are measured by means of a further object in the opposite direction in each case and distances of the vehicle from the object at an object distance are ascertained per se in each case on the basis of the one distance value and the further distance value and the one speed and the further speed of the vehicle.

9. Method according to claim 6 to 8,
**characterised in that**
the ascertained distances (d12, d22) of the vehicle (1) at the respective object distance (Ao) are compared with the known object distance (Ao) in each case, taking into account the known length (dz) of the vehicle (1), and a defect signal is generated in the event of differences.

10. Method according to one of claims 6 to 9,
**characterised in that**
in order to determine the position of a vehicle embodied as a rail vehicle in a station, in which access to a rail vehicle is only provided at precisely predefined points, an object is used at the start and at the end of the station in each case.

11. Method according to one of claims 6 to 9,
**characterised in that**
object distances (Ao) with different lengths are used in each case.

12. Method according to one of claims 6 to 10,
**characterised in that**
in order to determine the initial position of the vehicle (31), at least one first initial object (34) and at least one second initial object (35) are used, which differ in their embodiment from the first and second objects along the route of the vehicle (1).

13. Application of the method according to one of the preceding claims in a rail network with lines with junction-free line sections and lines with impaired GPS reception on line sections with impaired GPS reception, while the position of the rail vehicle on junction-free line sections is ascertained by means of GPS signals and the digital route map.

14. System for determining the position of a track-bound vehicle (1), in particular a rail vehicle, on its route (2), with objects (4) at known positions along the route (2) and with a locating facility (9) with assigned radar facility (7), which is designed to ascertain the speed (v1) of the vehicle (1) by means of recording the frequency shift of a received reflected radar signal (Sr1),

**characterised in that**
the radar facility (7) is further designed to ascertain a distance value (d1) of the vehicle (1) in relation to the object (4) by means of recording the signal transit time of the received reflected radar signal (Sr1) and to determine the speed (v2) of the vehicle (1) by means of recording the frequency shift of a further, following received reflected radar signal (Sr2), as well as

to ascertain a further distance value (d2) of the vehicle (1) in relation to the object (4) by means of recording the signal transit time of the received reflected radar signal (Sr2) and the locating facility (9) is designed, if a difference between the ascertained distance values (d1,d2) matches a path length calculated from the ascertained speeds (v1,v2) and the period of time, to use the further distance value (d2) to determine the position of the vehicle.

**Revendications**

1. Procédé de détermination de la position d'un véhicule (1) guidé sur rails, notamment d'un véhicule ferroviaire, au moyen d'objets (4) en position connue le long de l'itinéraire (2) emprunté par le véhicule (1), dans lequel pour la détermination de la position du véhicule (1) par rapport à l'objet (4) respectif, au moyen d'un radar, on détermine la vitesse (v1) respective du véhicule (1) au moyen d'un relevé du décalage en fréquence d'un signal (Sr1) radar réfléchi reçu et on détecte l'objet respectif,
**caractérisé en ce que**,
lors de la détection de l'objet (1) respectif, on détermine une valeur (d1) de distance du véhicule (1) à l'objet (4), en relevant le temps de parcours du signal (Sr1) radar réfléchi reçu,
on détermine la vitesse (v2) du véhicule en relevant le décalage en fréquence d'un autre signal (Sr2) radial réfléchi reçu suivant après une durée (Td),
on détermine une autre valeur (d2) de distance du véhicule (1) à l'objet (4), en relevant le temps de parcours de l'autre signal (Sr2) radar réfléchi reçu et, si une différence des valeurs (d1, d2) de distance coïncide avec une longueur de trajet calculée à partir des vitesses (v1, v2) déterminées et de la durée (Td), on utilise l'autre valeur (d2) de distance pour la détermination de position du véhicule (1).

2. Procédé suivant la revendication 1,
**caractérisé en ce que**
l'on utilise un atlas de voies numérique pour tenir compte de la position des objets (4).

3. Procédé suivant la revendication 1 ou 2,
**caractérisé en ce que**,
pour obtenir les signaux (Sr1, Sr2) radars réfléchis, on utilise un émetteur (10) d'impulsions, par lequel on commande un dispositif (7) radar de manière à ce qu'il émette des signaux (Sg1, Sg2)radars à une distance dans le temps donnée à l'avance.

4. Procédé suivant la revendication 3,
**caractérisé en ce que**
l'on utilise comme émetteur d'impulsions un récepteur GPS.

5. Procédé suivant l'une des revendications précédentes,
**caractérisé en ce que**
l'on obtient les signaux radars reçus réfléchis au moyen d'objets se trouvant, dans le sens de marche, avant le véhicule et on utilise en outre un dispositif d'initialisation et un indicateur de sens.

6. Procédé suivant l'une des revendications 1 à 4,
**caractérisé en ce que**
l'on émet les signaux radars de l'une des extrémités du véhicule (1) et de l'autre extrémité du véhicule (8) et on utilise des objets (4) dans le sens (F1) de marche du véhicule (1) et d'autres objets (22) en sens contraire respectivement dans une distance (Ao) des objets.

7. Procédé suivant la revendication 6,
**caractérisé en ce que**,
respectivement au moyen de l'objet (4) dans le sens (F1) de la marche et de l'autre objet (22) en sens contraire, on détermine la une valeur (d22) de distance et l'autre valeur (d12) de distance et au moyen de l'objet (4) dans le sens (F1) de marche, on mesure la une vitesse du véhicule et, au moyen de l'autre objet (22), l'autre vitesse dans le sens contraire et, à l'aide de la une valeur (d22) de distance et de l'autre valeur (d12) de distance et de la une et de l'autre vitesse du véhicule (1), on détermine respectivement des distances (d12, d22) en soi du véhicule (1) aux objets (4, 22) dans une distance (Ao) des objets.

8. Procédé suivant la revendication 6,
**caractérisé en ce que**
on détermine respectivement, au moyen d'un objet dans le sens de marche, la une et l'autre valeur de distance et, au moyen respectivement un autre objet dans le sens contraire, on mesure la une et l'autre vitesse et
à l'aide de la une valeur de distance et de l'autre valeur de distance et de la une et de l'autre vitesse du véhicule, on détermine respectivement des distances en soi du véhicule aux objets dans une distance des objets.

9. Procédé suivant l'une des revendications 6 à 8,
**caractérisé en ce que**
l'on compare, à la distance (Ao) des objets connue respectivement, les distances (d12, d22) déterminées du véhicule (1) dans la distance (Ao) des objets respective, en incorporant la longueur (dz) connue du véhicule (1), et, s'il y a une différence, on produit un signal d'erreur.

10. Procédé suivant l'une des revendications 6 à 9,
**caractérisé en ce que**,
pour la détermination de la position d'un véhicule, constitué sous la forme d'un véhicule ferroviaire, dans un poste où l'accès à un véhicule ferroviaire est prévu seulement en des points prévus exactement, on utilise respectivement un objet au début et à la fin du poste.

11. Procédé suivant l'une des revendications 6 à 9,
**caractérisé en ce que**
on utilise respectivement des distances (Ao) des objets de longueur différente.

12. Procédé suivant l'une des revendications 6 à 10,
**caractérisé en ce que**,
pour une détermination initiale de position du véhicule (31), on utilise au moins un premier objet (34) initial et au moins un deuxième objet (35) initial, qui se distinguent dans leur conformation des premiers et des deuxièmes objets le long de la voie empruntée par le véhicule (1).

13. Utilisation du procédé suivant l'une des revendications précédentes, dans un réseau de chemins de fer, comprenant des voies ayant des sections de voie sans embranchement et des voies à réception GPS empêchée, sur des sections de voie à réception GPS empêchée, tandis que la position du véhicule ferroviaire sur des sections de voie sans embranchement est déterminée au moyen de signaux GPS et de l'atlas de voies numériques.

14. Système de détermination de la position d'un véhicule (1) guidé sur rails, notamment d'un véhicule ferroviaire, sur son itinéraire (2), par des objets (4) en position connue le long de l'itinéraire (2) et par un dispositif (9) de localisation à dispositif (7) radar associé, qui est conçu pour déterminer la vitesse (v1) du véhicule (1) au moyen d'un relevé du décalage en fréquence d'un signal (Sr1) radar réfléchi reçu,
**caractérisé en ce que**
le dispositif (7) radar est conçu en outre pour déterminer une valeur (d1) de distance du véhicule (1) à l'objet (4) au moyen d'un relevé du temps de parcours du signal (Sr1) radar réfléchi reçu et pour déterminer la vitesse (v2) du véhicule (1) au moyen d'un relevé du décalage en fréquence d'un autre signal (Sr2) radar suivant réfléchi reçu, ainsi que pour déterminer une autre valeur (d2) de distance du véhicule (1) à l'objet (1) au moyen d'un relevé du temps de parcours du signal (Sr2) radar réfléchi reçu et

le dispositif (9) de localisation est conçu pour, lorsqu'une différence entre les valeurs (d1, d2) de distance déterminées coïncide avec une longueur de trajet calculée à partir des vitesses (v1, v2) déterminées et de la durée, utiliser l'autre valeur (d2) de distance pour la détermination de la position du véhicule.

# FIG 1

1
11 10
8
F1
9
7
3
5
2
Sr1   Sg1   6   4
Sr1   Sg2
t1
t2
d2
d1

# FIG 2

11 10
1
F1
9
8
20
7
21
22
2
4
6
d12   dz   d22
Ao

# FIG 3

40
33   41
α
32   31
30
34   β   35
36   37   38   39

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0761522 A1
- US 4863123 A
- US 4063239 A
- US 2007109176 A1
- DE 102006028465 A1
- DE 2942933 A1
- DE 2506605 A1
- DE 102013219805
- WO 2011076512 A1
- WO 2005056363 A1

**In der Beschreibung aufgeführte Nicht-Patentliteratur**

- **G. HILGER.** Radartechnologie - berührungsfreie Weg- und Geschwindigkeitsmessung für Schienenfahrzeuge. *Zeitschrift für Eisenbahnwesen und Verkehrstechnik, Die Eisenbahntechnik, Glasers Annalen, Georg Siemens Verlagsbuchhandlung,* 01. September 1998, vol. 122 (9/10), ISBN 0941-0589, 533
- *PRIOR ART JOURNAL,* April 2014, 125-128